# EUROPEAN PATENT APPLICATION

(11) **EP 4 541 238 A1**
(43) Date of publication of application: **23.04.2025**
(21) Application number: 23203821.6
(22) Date of filing: 16.10.2023
(51) Int. Cl.: A47J 31/54, H05B 6/64

(54) **ON-WING HEATING CONTAINER FOR BEVERAGE MAKERS**

(71) Applicant: B/E Aerospace, Inc., Winston Salem, NC 27105 (US)
(72) Inventor: PANJER, Frederik Adrian Stephan, Maarsbergen (NL)
(74) Representative: Dehns

(57) **Abstract**

A beverage maker (200) comprises a heating cavity (212), a water input (210) configured to be connected to an external water supply and to channel water from the external water supply towards the heating cavity, a water output (214) configured to channel water away from the heating cavity and a means for heating water (208). Said means for heating water is disposed external to the heating cavity and is configured to heat water within the heating cavity. The heating cavity is configured to receive a removable water container (218) so as to form a fluid flowpath from the water input to the removable water container, and from the removable water container to the water output.

## Description

### TECHNICAL FIELD

The present invention relates to beverage makers. The beverage makers may comprise heating containers for heating water therein for use in making beverages.

### BACKGROUND

The preparation of hot and cold beverages for human consumption has long been aided by apparatuses capable of automating at least a part of the preparation process. The preparation of drinks such as coffee, tea and hot chocolate almost always involves heating, or boiling, of water. Because of this, many of these apparatuses, or beverage makers, have incorporated means of heating water therein. The water in such beverage makers may be heated in a reservoir, before being mixed with a desired substance, or may be heated as it travels through the machine. In both cases, the composition of the water being heated is an important factor when it comes to maintenance of the reservoir or passages through which the water travels. In particular, when it evaporates, water rich in certain minerals such as calcium and magnesium can leave behind thick, chalky deposits known as limescale. Limescale tends to build up over time and is particularly prevalent in equipment that is used to heat water. When such water is used in hot beverage makers, the limescale deposits accumulate in the water reservoirs and passageways and increasingly compromise performance of the beverage maker, such as by restricting the flow area through the machine. Eventually, the limescale buildup necessitates the cleaning or replacement of the affected parts of the beverage maker, both of which can be difficult or expensive to achieve. The mineral content of water varies based on geographical region, or on specific water supplies. The higher the mineral content of the water used in a beverage maker, the sooner or more often the beverage maker will need to be serviced. For beverage makers used on aircraft, it is very difficult to control or predict the mineral content of the water supplied for use in the beverage maker. This is because the water must be supplied, between flights, from various airports around the world, each having different water mineral levels. If a beverage maker becomes inoperable due to limescale build up, it typically needs to be removed from the aircraft, sent to a repair center, serviced, and returned to be reinstalled. Due to the long timescales involved in this process, airlines often swap the failed beverage maker for an operational one, which can be particularly costly. The present invention seeks to provide capability to perform preventive maintenance on the beverage maker without removing it from the aircraft such that a technician may board the aircraft and quickly return the beverage maker to an operating condition.

### SUMMARY

A beverage maker according to claim 1 is provided, comprising a heating cavity, a water input configured to be connected to an external water supply and to channel water from the external water supply towards the heating cavity, a water output configured to channel water away from the heating cavity and a means for heating water. Said means for heating water is disposed external to the heating cavity and is configured to heat water within the heating cavity. The heating cavity is configured to receive a removable water container so as to form a fluid flowpath from the water input to the removable water container, and from the removable water container to the water output.

A wall of the heating cavity may be formed of a removable retaining cap.

The retaining cap may comprise a first threaded surface and the heating cavity may comprise a second threaded surface. The first and second threaded surfaces may be configured to interact with one another so as to permit attachment and detachment of the retaining cap to the remainder of the heating cavity.

The retaining cap may comprise a locking means configured to lock the retaining cap to the remainder of the heating cavity.

The heating cavity may comprise one or more guide grooves along its inner surface configured to accommodate one or more guide protrusions on the outer surface of the removable water container.

The means for heating water may comprise one or more antenna configured to generate electromagnetic radiation within the heating cavity, said electromagnetic radiation being capable of heating water.

The walls of the heating cavity may be formed of a material configured to prevent leakage of the electromagnetic radiation from the heating cavity.

A removable water container for use with the beverage maker of any aforementioned combination of features as defined in claim 8 is also provided. The removable water container comprises a water inlet and a water outlet configured to couple with the water input and water output of the beverage maker, respectively, such that when the removable water container is installed in the beverage maker, a fluid flowpath is formed from the water input to the removable water container and from the removable water container to the water output.

The removable water container may comprise one or more guide protrusions along its outer surface configured to be accommodated by one or more guide grooves on the inner surface of the heating cavity.

The walls of the removable water container may be formed of a material that allows passage of electromagnetic radiation capable of heating water therethrough.

The removable water container may comprise a slide bushing on its outer surface configured to facilitate installation of the removable water container in the beverage maker.

A system comprising the beverage maker of any combination of features as described in the previous paragraphs and a removable water container of any combination of features as described in the previous paragraphs as defined in claim 12 is also provided. When the removable water container is installed in the beverage maker, the system is configured such that water may flow from the water input, through the removable water container and then through the water output. The means for heating water is configured to heat water present in the removable water container.

A method of replacing a removable water container in a beverage maker according to any combination of features as described in the previous paragraphs as defined in claim 13 is also provided. The method comprises removing a first water according to any combination of features as described in the previous paragraphs from the heating cavity of the beverage maker. The method further comprises installing a second water container according to any combination of features as described in the previous paragraphs in the heating cavity of the beverage maker.

The method may further comprise, before removing the first water container, removing a retaining cap from the heating cavity of the beverage maker; and after installing the second water container in the heating cavity of the beverage maker, fixing the retaining cap to the heating cavity.

The method may further comprise, before installing the second water container in the heating cavity of the beverage maker, aligning one or more guide protrusions on the outer surface of the water container with one or more corresponding guide grooves on the inner surface of the heating cavity.

### BRIEF DESCRIPTION OF THE DRAWINGS

Figure 1 illustrates a perspective view of a beverage maker.
Figure 2 illustrates a schematic side-view of a beverage maker and an inserted water container in accordance with the present disclosure.
Figure 3 illustrates separated components of the beverage maker and water container of the present disclosure.

### DETAILED DESCRIPTION

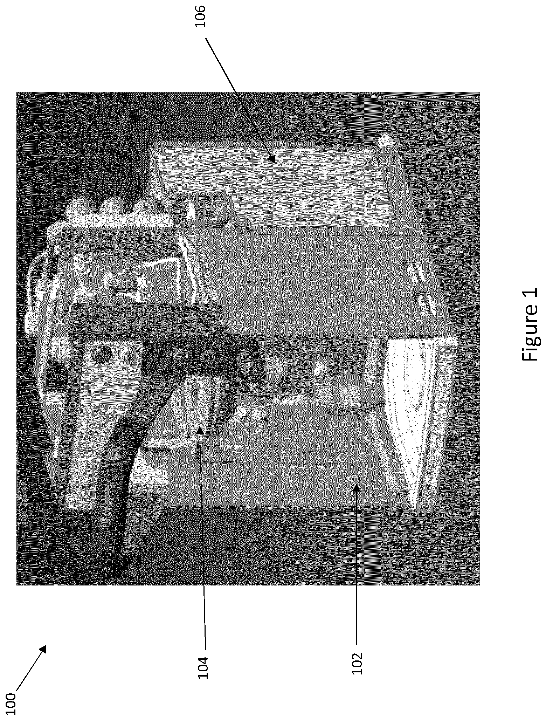

Figure 1 illustrates an example beverage maker 100, which may be used on an aircraft (not shown), and which may be utilised with the present disclosure. The beverage maker 100 may comprise a brew head 104, through which a prepared hot beverage may flow. The brew head 104 may also be configured to perform or facilitate extraction of a medium into hot water to brew said hot beverage before it exits the brew head 104. Below the brew head 104 may be formed a space 102 in which a receptacle (not shown) can be placed. The space 102 and receptacle are configured such that when the receptacle is placed in the space 102, the receptacle catches and stores liquid, i.e. the hot beverage, exiting the brew head 104 above. The beverage maker 100 is also provided with a water inlet and a means for heating water channeled into the beverage maker 100 through said water inlet. Although the water inlet and means for heating water are not shown in Figure 1, these may be disposed in the rear section 106 of the beverage maker 100 behind the space 102 and brew head 104.

One of the problems associated with beverage makers 100 such as that illustrated in Figure 1 is that when water with a high-mineral content (i.e. "hard" water) is taken in by the beverage maker and subsequently heated, the volume in the beverage maker 100 in which the water is heated, be that in a heating reservoir or along a length of piping or similar, accumulates mineral deposits, also known as limescale. Buildup of limescale within the beverage maker 100 impacts the performance and efficiency of the beverage maker 100. Eventually, the limescale buildup can cause the beverage maker 100 to stop functioning. At this point, the affected parts must be repaired, cleaned or replaced, usually at a repair centre offsite.. This presents a logistical challenge for airlines, who operate on very tight schedules and to whom any delay in having a fully-functional aircraft can be very expensive. Equally, replacing the beverage container whilst the previous beverage maker is repaired can be particularly costly.

One way in which the problem of limescale buildup has been addressed is to use solid-state radio-frequency heating as the means for heating water in the beverage maker 100. Generally, when water is heated, it loses its ability to hold mineral scale particles dissolved therein. The freed scale particles then tend to precipitate on the hottest proximate surfaces. Usually, in systems that do not employ electromagnetic heating methods, these are the surfaces of a heating element in contact with the water. With microwave or radio wave heating systems, since the water is heated via a varying electromagnetic field, which increases friction between the water molecules, the presence of a heating element in direct contact with the water is obviated. Although the heated water in such a system heats the container and leaves scale residue on the container surfaces, the scale deposit is typically significantly less than when using a direct contact heating element. Although this extends the lifetime of the beverage maker somewhat, eventually the limescale build up will be such that the beverage maker needs to be repaired using the known processes. The present invention, as described in the embodiments below, aims to provide a beverage maker that can be more easily serviced and precludes the need to remove the entire beverage maker and have it repaired offsite.

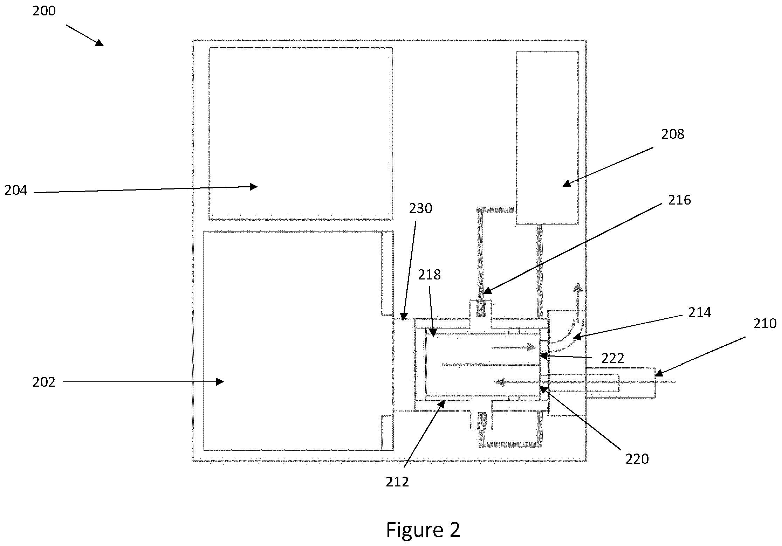

Figure 2 illustrates a cross-section of a beverage maker 200 according to the present disclosure. The beverage maker may comprise an arrangement as in Figure 1, with a brew head 104 and space 102 for a beverage-receiving receptacle disposed below, although this arrangement is not essential to the main concept of the disclosure. The beverage maker 200 also comprises a means for heating water 208. The means for heating water 208 is configured to heat water without a heating element in direct contact with the water. The means for heating water 208 may be a solid state radio frequency heater device, a microwave device, or any other form of heating device capable of heating water without a heating element being in direct contact with the water.

As illustrated, the beverage maker 200 comprises a water input 210. The water input is configured to be connected to a water supply (not shown) and receive water from said water supply. The water input 210 is configured to channel water from the water supply into a heating cavity 212 inside the beverage maker 200. The means for heating water 208 is positioned and configured to heat water inside the heating cavity 212. In some embodiments, the means for heating water 208 comprises antenna wiring 216 configured to produce electromagnetic radiation inside the heating cavity 212. For example, the means for heating water 208 may be a solid state radio frequency heater device, whose antenna 216 are configured to produce radio waves within the heating cavity 212 in order to heat water therein. A water output 214 configured to channel water out from the heating cavity 212 is also provided. The (heated) water leaving the heating cavity 212 via water output 214 may then be utilised by other components of the beverage maker 200, such as the brew head 104 to produce the hot beverage.

As shown in Figure 2, the beverage maker 200 may further be provided with a removable water container 218. The water container comprises a water inlet 220 configured to couple with the water input 210 such that water flows through the water input 210 and directly through the water inlet 220 into the water container 218 without spillage. The water container further comprises a water outlet 222 configured to couple with the water output 214 such that water may flow from inside the water container 218 through the water outlet 222 and through the water output 214 without spillage. The water container may define an inbuilt and specifically designed flow path therewithin between its water inlet 220 and water outlet 222. The water container 218 is configured to be manually removed from, and reinserted into, the heating cavity 212 of the beverage maker 200. The couplings between the water input 210 and water inlet 220 and water output 214 and water outlet 222 are formed upon insertion of the water container 218 into the heating cavity 212. The water container 218 and heating cavity 212 may be configured such that the water container 218 can be press-fit into the heating cavity 212 to form the aforementioned couplings.

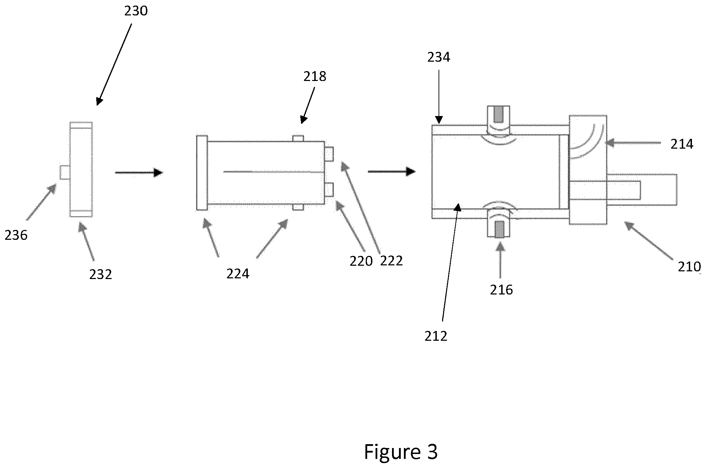

Figure 3 illustrates the water container 218 and heating cavity 212 of the beverage maker 200 when the water container 218 is removed from, or not yet inserted into, the heating cavity 212. The water container 218 may comprise slide bushings 224 configured to reduce friction between the water container 218 and heating cavity 212 upon insertion of the form into the latter, and generally to facilitate said insertion. The water container 218 may also comprise one or more guide protrusions (not shown) on its outer surface configured to engage with a corresponding number of guide grooves (not shown) provided on the inner surface of the heating cavity 212. The guide protrusions may be configured to engage in a sliding relationship with the guide grooves so as to only allow insertion of the water container 218 into the heating cavity 212 at a particular orientation, such that the couplings between the water inlet 220 and input 210 and water outlet 222 and water output 214 are realised upon said insertion.

As best shown in Figure 2, one end of the heating cavity 212 is provided by a retaining cap 230. The retaining cap 230 is configured such that, when installed as shown in Figure 2, the heating cavity 212 forms a closed chamber. The retaining cap 230 is however configured to be removed and reinstalled as necessary. The retaining cap 230 may comprise a means to secure the retaining cap 230 with respect to the heating cavity 212. Said means may comprise a threaded outer surface 232, as shown in Figure 3, configured to mate in a threaded engagement with a corresponding threaded inner surface 234 in the heating cavity 212. The retaining cap 230 may also comprise a handle 236 on its outer surface configured to facilitate insertion and/or turning of the retaining cap 230 with respect to the heating cavity 212.

For safety purposes, the retaining cap 230 may comprise a locking means (not shown). The locking means may be configured to lock the retaining cap 230 into its inserted position as shown in Figure 2. The locking means may only be unlockable with use of a key or special tool. Other methods such as biometric input and/or code input authorisation are also envisaged for unlocking of the locking means. The provision of the locking means ensures that only an authorised person can remove the retaining cap 230 from the remainder of the heating cavity 212. This is important as potential harmful radiation could escape the heating cavity 212 when in operation when the retaining cap 230 is removed. Generally, the interior walls of the heating cavity 212, including the inner wall of the retaining cap 230 are made of metal, or any other material capable of containing microwave or radio frequency radiation.

As well as forming a wall of the contained heating cavity 212, the retaining cap 230 also serves the function of securing the water container 218 in its installed position (as shown in Figure 2). To install the water container 218 in the heating cavity 212, the retaining cap 230 must be removed from the heating cavity 212. The water container 218 is then inserted into the heating cavity 212 such that the inlet 220 and outlet 220 on the former couple with the input 210 and output 214 on the latter. Once the water container 218 is installed, the retaining cap should be inserted and fixed with respect to the heating cavity 212 such that a contained heating cavity 212 is formed. The locking means of the retaining cap 230 may automatically lock upon said insertion, or may be manually locked thereafter.

In order to clean or replace the water container 218, for example after a certain level of limescale buildup therein, the retaining cap 230 must first be removed. The water container 218 can then be drawn out of the heating cavity 212 and either cleaned or replaced with a new water container 218. The cleaned or new water container 218 may then be reinserted in accordance with the steps in the previous paragraph. One of the advantages of this system is that, since microwave, radio frequency or similar means of heating the water in the water container 218 are used, the water container 218 does not itself need to comprise any heating element configured to contact the water therein. In fact, presence of metals suitable for inductive heating would be unsuitable for at least some types of contactless heating means, such as microwave devices. The water container 218 may therefore be formed of a single material, improving manufacturing simplicity. Examples of materials suitable for forming the water container 218 are PTFE, which may be filled with Mica fibers, PEEK, or any other high-temperature resistant, non-flammable, microwave and/or radio rave transparent material.

Although this disclosure has been described in terms of preferred examples, it should be understood that these examples are illustrative only and that the claims are not limited to those examples. Those skilled in the art will be able to make modifications and alternatives in view of the disclosure which are contemplated as falling within the scope of the appended claims.

## Claims

1. A beverage maker (200), comprising:
a heating cavity (212);
a water input (210) configured to be connected to an external water supply and to channel water from the external water supply towards the heating cavity (212);
a water output (214) configured to channel water away from the heating cavity (212);
a means for heating water (208), wherein said means for heating water (208) is disposed external to the heating cavity (212) and is configured to heat water within the heating cavity (212);
wherein the heating cavity (212) is configured to receive a removable water container (218) so as to form a fluid flowpath from the water input (210) to the removable water container (218), and from the removable water container (218) to the water output (214).

2. The beverage maker of claim 1, wherein a wall of the heating cavity (212) is formed of a removable retaining cap (230).

3. The beverage maker of claim 2, wherein the retaining cap (230) comprises a first threaded surface and the heating cavity (212) comprises a second threaded surface; wherein the first and second threaded surfaces are configured to interact with one another so as to permit attachment and detachment of the retaining cap (230) to the remainder of the heating cavity (212).

4. The beverage maker of claim 2 or 3, wherein the retaining cap (230) comprises a locking means configured to lock the retaining cap (230) to the remainder of the heating cavity (212).

5. The beverage maker of any preceding claim, wherein the heating cavity (212) comprises one or more guide grooves along its inner surface configured to accommodate one or more guide protrusions on the outer surface of the removable water container (218).

6. The beverage maker of any preceding claim, wherein the means for heating water (208) comprises one or more antenna configured to generate electromagnetic radiation within the heating cavity (212), said electromagnetic radiation being capable of heating water.

7. The beverage maker of claim 6, wherein the walls of the heating cavity (212) are formed of a material configured to prevent leakage of the electromagnetic radiation from the heating cavity (212).

8. A removable water container (218) for use with the beverage maker (200) of any preceding claim, wherein the removable water container (218) comprises a water inlet (220) and a water outlet (222) configured to couple with the water input (210) and water output (214) of the beverage maker (200), respectively, such that when the removable water container (218) is installed in the beverage maker (200), a fluid flowpath is formed from the water input (210) to the removable water container (218) and from the removable water container (218) to the water output (214).

9. The removable water container of claim 8, comprising one or more guide protrusions along its outer surface configured to be accommodated by one or more guide grooves on the inner surface of the heating cavity (212).

10. The removable water container of claim 8 or 9, wherein the walls of the removable water container (218) are formed of a material that allows passage of electromagnetic radiation capable of heating water therethrough.

11. The removable water container of any of claims 8 to 10, wherein the removable water container (218) comprises a slide bushing on its outer surface configured to facilitate installation of the removable water container (218) in the beverage maker (200).

12. A system, comprising:
the beverage maker (200) of any of claims 1 to 7;
the removable water container (218) of any of claims 8 to 11;
wherein, when the removable water container (218) is installed in the beverage maker (200), the system is configured such that water may flow from the water input (210), through the removable water container (218) and then through the water output (214);
wherein the means for heating water (208) is configured to heat water present in the removable water container (218).

13. A method of replacing a removable water container in a beverage maker according to any of claims 1 to 7, comprising:
removing a first water container (218) as defined in any of claims 8 to 11 from the heating cavity (212) of the beverage maker (200);
installing a second water container (218) as defined in any of claims 8 to 11 in the heating cavity (212) of the beverage maker (200).

14. The method of claim 13, further comprising:
before removing the first water container, removing a retaining cap from the heating cavity of the beverage maker; and
after installing the second water container in the heating cavity of the beverage maker,
fixing the retaining cap to the heating cavity.

15. The method of claim 13 or 14, further comprising:
before installing the second water container in the heating cavity of the beverage maker,
aligning one or more guide protrusions on the outer surface of the water container with one or more corresponding guide grooves on the inner surface of the heating cavity.
